# EUROPÄISCHE PATENTSCHRIFT

(11) **EP 2 637 818 B1**
(45) Veröffentlichungstag und Bekanntmachung des Hinweises auf die Patenterteilung: **02.08.2017**
(21) Anmeldenummer: 11813671.2
(22) Anmeldetag: 20.10.2011
(51) Int. Cl.: B23K 26/02, B23K 26/03, B23K 26/22, B23K 26/24, B23K 37/04, B23K 26/08, B23K 26/14

(54) **VORRICHTUNG UND VERFAHREN ZUM FÜGEN VON WERKSTÜCKEN MITTELS LASERSTRAHLS UND BEWEGBARER ANDRUCKELEMENTE**
DEVICE FOR AND METHOD OF JOINING WORKPIECES BY MEANS OF A LASER BEAM AND MOVABLE PRESSING ELEMENTS
DISPOSITIF ET PROCÉDÉ D'ASSEMBLAGE DE PIÈCES AU MOYEN D'UN FAISCEAU LASER ET D'ÉLÉMENTS DE COMPRESSION MOBILE

(30) Priorität: 03.06.2011 DE 102011050832; 01.06.2011 DE 102011050798; 09.11.2010 DE 102010060459
(43) Veröffentlichungstag der Anmeldung: 18.09.2013
(73) Patentinhaber: Scansonic MI GmbH, 12681 Berlin (DE)
(72) Erfinder: HASCHKE, Igor, 10437 Berlin (DE); KILIAN, Arwed, 14974 Ludwigsfelde (DE)
(74) Vertreter: Kaufmann, Sigfrid
(86) Internationale Anmeldenummer: PCT/DE2011/075254
(87) Internationale Veröffentlichungsnummer: WO 2012/062308

(56) Entgegenhaltungen:
- JP-A- 5 077 071
- JP-A- 58 047 588
- JP-A- 58 053 384
- US-A1- 2005 230 363

## Beschreibung

Die Erfindung betrifft eine Laserschweißvorrichtung zum Fügen von Werkstücken mittels eines Laserstrahls gemäß dem Oberbegriff des Anspruchs 1 (siehe, z.B., JP H58/053384 A), und ein entsprechendes Verfahren, siehe Anspruch 10. Insbesondere dort, wo Werkstücke mit hoher Schweißgeschwindigkeit, schmaler Schweißnahtform und geringem thermischem Verzug gefügt werden müssen, wird das Laserstrahlschweißen angewendet. Die zu fügenden Werkstücke werden z.B. mittels dafür vorgesehener Aufnahme- bzw. Fixiervorrichtungen in der jeweils gewünschten Positionierung fixiert und dann mittels Laserstrahlschweißens miteinander verbunden.

Aufgrund der beim Laserschweißen verwendeten hohen Lichtintensitäten werden Laserschweißvorrichtungen in der Regel in einer separaten Sicherheitskabine betrieben, welche ein Abschirmen der Umgebung vor der Laserstrahlung gewährleistet. Solche Sicherheitskabinen erhöhen jedoch, da sie in der Regel die gesamte Laserbearbeitungsvorrichtung umhausen, den Platzbedarf einer solchen Vorrichtung und der Betrieb der Kabinen ist aufwendig und kostenintensiv.

Die EP 2 149 421 A1 beschreibt eine Vorrichtung zum Schweißen von Werkstücken mittels eines Laserstrahls, wobei der Laserstrahl eines Faserlasers mittels eines in einem Gehäuse angeordneten Kollimators fokussiert wird. Der Kollimator ist mittels eines Linearantriebs parallel zu einem Austrittsschlitz, der in einem Druckabschnitt bzw. Druckstück des Gehäuses vorgesehen ist, derart verfahrbar, dass der Laserstrahl durch den Austrittsschlitz hindurch aus dem Gehäuse austreten kann und eine geradlinigen Schweißnaht auf einem Werkstück erzeugen kann, das zwischen dem Druckstück des Gehäuses und einem zweiten Druckstück fixiert ist.

Die beschriebene Linearführung ermöglicht jedoch lediglich eine geradlinige Strahlführung, sodass z.B. zum Erzeugen gekrümmter Schweißnähte ein wiederholtes Umpositionieren der zu schweißenden Werkstücke und somit ein entsprechend hoher Zeitaufwand erforderlich ist. Des Weiteren ist die Vorschubgeschwindigkeit des Laserprozesses durch den Linearantrieb vorgegeben und z.B. aufgrund der mechanischen Stabilität des Kollimatorsystems begrenzt, wobei solche Kollimatoren in der Regel sensible optische Komponenten aufweisen und daher z.B. keinen allzu hohen Beschleunigungen ausgesetzt werden sollten.

Des Weiteren geht die EP 2 149 421 A1 nicht auf die Form bzw. Gestalt der zu bearbeitenden Werkstücke ein; z.B. berücksichtigen die beschriebene Vorrichtung bzw. die zugehörigen Druckstücke nicht, dass die Form der zu fixierenden Werkstücke variieren kann und/oder Werkstücke mit einer unregelmäßigen (z.B. nicht planparallelen, sondern etwa dreidimensional gewölbten oder gestuften) Form zu bearbeiten sein können. Beim Bearbeiten von Werkstücken mit einer solchen unregelmäßigen Gestalt kann es z.B. vorkommen, dass der Austrittsschlitz des Gehäuses nicht vollständig von dem Werkstück abgedeckt werden kann und somit Laserstrahlung an dem Werkstück vorbei aus dem Gehäuse austreten und etwa Personen treffen kann.

Der Erfindung liegt die Aufgabe zugrunde, eine Laserschweißvorrichtung zum Fügen von Werkstücken (z.B. Blechen) mittels eines Laserstrahls und ein entsprechendes Verfahren bereitzustellen, die ein Laserbearbeiten von Werkstücken unterschiedlicher Geometrien bzw. Formen mit einer hohen Schweißgeschwindigkeit ermöglichen und gleichzeitig ein Austreten von Laserstrahlung zuverlässig unterbinden.

Gelöst wird die Aufgabe durch eine Vorrichtung gemäß dem Patentanspruch 1 und ein Verfahren gemäß dem Patentanspruch 10; vorteilhafte Weiterbildungen der Erfindung sind in den Unteransprüchen beschrieben.

Gemäß der Erfindung wird eine Laserschweißvorrichtung zum Fügen von Werkstücken (z.B. Blechen aus Metall oder Werkstücken aus Kunststoff) mittels eines Laserstrahls bereitgestellt, wobei die Laserschweißvorrichtung eine Scanneroptik zum Führen des Laserstrahls (in Richtung zu den Werkstücken hin) und mindestens ein Andruckelement, das während des Fügeprozesses zum Fixieren der Werkstücke entlang einer entsprechenden Andruckrichtung auf zumindest eines der zu fügenden Werkstücke gepresst bzw. gedrückt wird, aufweist. Des Weiteren weist die Laserschweißvorrichtung ein (z.B. mehrteiliges) Gehäuse auf, das die Scanneroptik und den von der Scanneroptik zu den Werkstücken hin verlaufenden Laserstrahl (zumindest teilweise oder auch vollständig) umhaust. Das Andruckelement bildet einen Teil des Gehäuses und ist relativ zu dem übrigen Gehäuse mit mindestens einem Bewegungsfreiheitsgrad - aktiv und/oder passiv - bewegbar. Zum Beispiel kann das Andruckelement an dem übrigen Gehäuse (dem "Restgehäuse") bewegbar gelagert sein, d.h. bewegbar mit dem Restgehäuse verbunden sein; es kann auch vorgesehen sein, das Andruckelement separat von dem Restgehäuse relativ zu demselben bewegbar zu lagern. Des Weiteren können mehrere Andruckelemente des oben beschriebenen Typs vorgesehen sein.

Das Gehäuse kann z.B. derart ausgebildet sein, dass es zu dem oder den Werkstücken hin offen ist und dass -wenn das Andruckelement als Teil des Gehäuses auf dem bzw. den Werkstücken aufsitzt - das Gehäuse zusammen mit dem oder den Werkstücken den Laserstrahl vollständig umhaust, wobei dann das oder die Werkstücke sozusagen die Öffnung des Gehäuses schließen.

Das mindestens eine Andruckelement wird - zum Fixieren der Werkstücke - entlang einer entsprechenden Andruckrichtung (d.h. der Richtung des von einem Andruckelement beim Fixieren des Werkstücks ausgeübten Drucks) auf zumindest eines der Werkstücke gepresst, wobei die Werkstücke z.B. zwischen dem Andruckelement und einem entsprechenden Widerlager (z.B. einem weiteren Andruckelement) eingeklemmt und somit fixiert werden. Indem das Andruckelement gleichzeitig als Teil des Gehäuses zum Abschirmen der Laserstrahlung dient, d.h. als Abschirmelement, kann eine platzsparende Anordnung realisiert werden.

Indem das Andruckelement / die Andruckelemente relativ zu dem Restgehäuse bewegbar gelagert ist/sind, kann das zuverlässige Fixieren von Werkstücken mit unterschiedlichen dreidimensionalen Formen bei gleichzeitigem lichtdichten Abschließen des Gehäuses ermöglicht werden, z.B. indem das Andruckelement beim Andrücken unter Ausnutzung des mindestens einen Bewegungsfreiheitsgrades entsprechend der Oberflächenform des zu fixierenden Werkstücks orientiert wird, sodass ein lückenloses Aufsitzen des Andruckelements auf dem Werkstück resultiert.

Um eine Gefährdung von Personen auszuschließen, kann vorgesehen sein, das Ein- und Ausschalten des Laserstrahls mit dem Aufsitzen und Anheben des Andruckelements zu synchronisieren; d. h., der Laser wird erst eingeschaltet, wenn oder (kurz) nachdem das Andruckelement auf dem Blech aufgesetzt wird, und abgeschaltet, wenn oder (kurz) bevor das Andruckelement wieder angehoben wird. Ein solches synchronisiertes Schalten des Lasers kann z.B. automatisch über geeignete Schalter bzw. Sensoren erfolgen. Gemäß der Erfindung wird von innerhalb und/oder außerhalb des Gehäuses angeordneten, in einen Sicherheitskreis integrierten Sensoren die Intensität von (z.B. an den Werkstücken) gestreuter Laserstrahlung detektiert. Die Streustrahlungs-Intensität gemäß der Erfindung wird elektronisch erfasst und ausgewertet, wobei bei Überschreiten eines Grenzwertes Alarm ausgelöst und/oder der Fügeprozess unterbrochen werden kann. Gemäß einer Ausführungsform weist die Scanneroptik mindestens einen bewegbaren Scannerspiegel zum Führen des Laserstrahls auf.

Der Laserstrahl kann z.B. von einem innerhalb des Gehäuses angeordneten Laser erzeugt werden, oder von einem außerhalb des Gehäuses angeordneten Laser erzeugt und mittels lichtleitender optischer Elemente (z.B. Lichtleitfasern, Spiegel, Linsen etc.) in das Gehäuse zu der Scanneroptik geführt werden, wobei die lichtleitenden Elemente und die Strahlführung von dem Laser zu der Scanneroptik bevorzugt lichtdicht ummantelt sind.

Die Scanneroptik kann z.B. eine Fokussiervorrichtung zum Einstellen der Fokusposition des Laserstrahls und mindestens einen (z.B. mittels eines GalvanometerAntriebs) schwenkbar angeordneten Scanner- bzw. Ablenkspiegel zum Führen bzw. Umpositionieren des Laserstrahls (bzw. der Fokusposition des Laserstrahls) aufweisen. Da solche Ablenkspiegel relativ klein gehalten sein können und somit in der Regel ein geringes Massenträgheitsmoment aufweisen, ermöglichen sie ein schnelles Umpositionieren der Spiegel zu einer anderen Drehwinkelposition und somit ein schnelles Umpositionieren des Laserstrahls. Des Weiteren kann die Scanneroptik z.B. zwei Scannerspiegel aufweisen, die um senkrecht zueinander verlaufende (Galvanometer-)Achsen schwenkbar sind, sodass der Laserstrahl durch Reflexion an den Spiegeln und entsprechendes Ändern der Drehwinkelposition der Spiegel zweidimensional geführt werden kann, wobei z.B. gekrümmte Schweißnähte zeiteffektiv ohne ein Umpositionieren der zu bearbeitenden Werkstücke erzeugt werden können.

Gemäß einer Ausführungsform ist das mindestens eine Andruckelement um eine (im Wesentlichen) senkrecht zu der Andruckrichtung verlaufende Achse schwenkbar bzw. verkippbar an dem übrigen Gehäuse gelagert.

Gemäß dieser Ausführung kann z.B. - wenn ein Andruckelement mit einem geradlinigen bzw. ebenen Andruckabschnitt verwendet wird und das einzuspannende bzw. zu fixierende Werkstück eine keilförmige (und z.B. keine planparallele) Gestalt aufweist - das Andruckelement beim Aufsetzen auf das Werkstück um den Öffnungswinkel des keilförmigen Werkstücks verkippen, sodass der Andruckabschnitt des Andruckelements plan auf der Keiloberfläche aufliegt und somit kein Laserlicht zwischen dem Andruckelement und dem Werkstück hindurchtreten kann.

Es kann auch vorgesehen sein, das Andruckelement - z.B. mittels einer Kugelkalotte - um mehrere Achsen bzw. um zwei zueinander senkrechte Achsen schwenkbar bzw. verkippbar zu lagern.

Gemäß der Erfindung ist das mindestens eine Andruckelement entlang der Andruckrichtung relativ zu dem übrigen Gehäuse bewegbar, z.B. verfahrbar, an dem übrigen Gehäuse gelagert bzw. angebracht. Gemäß der Erfindung sind mehrere entlang der Andruckrichtung verfahrbare Andruckelemente vorgesehen, wobei z.B. - beim Einspannen eines stufenförmigen Werkstücks -jedes der Andruckelemente mit seinem Andruckabschnitt auf eine einer jeweiligen Stufe des Werkstücks entsprechende Höhe verfahren werden kann, sodass ein lichtdichtes Einspannen eines solchen gestuften Werkstücks möglich ist.

Zum Beispiel kann ein solches Andruckelement entlang der Andruckrichtung - aktiv und/oder passiv - in das Restgehäuse (d.h. in das übrige Gehäuse) einfahrbar bzw. in Richtung zu einem zu fixierenden Werkstück hin ausfahrbar sein. Es kann z.B. vorgesehen sein, das Andruckelement mittels Federn (etwa Spiralfedern oder pneumatischer Federn) passiv bewegbar an dem übrigen Gehäuse derart anzubringen, dass beim Aufsetzen des Andruckelements auf ein Werkstück ein Abfedern der Aufsetzbewegung erfolgt.

Ferner kann ein solches Andruckelement - z.B. mittels elektromotorischer oder hydraulischer Aktoren - aktiv bewegbar an dem übrigen Gehäuse z.B. derart angeordnet sein, dass es unabhängig von einer Bewegung des übrigen Gehäuses an die Werkstücke heranbewegt und von diesen weg bewegt werden kann. Dies hat z.B. den Vorteil, dass für einen Positionswechsel der Vorrichtung oder für ein Nachführen der zu fügenden Werkstücke nicht zwingend das gesamte Gehäuse, sondern lediglich die als Andruckelement dienenden Gehäuseteile mittels der Aktoren etwas von dem Werkstück abgehoben werden brauchen. Zudem ist eine Erkennung von Unregelmäßigkeiten am Werkstück oder der Vorrichtung (z.B. an den Andruckelementen) möglich, z.B. indem die Abweichung der angefahrenen Position von einer Sollposition ermittelt wird. Fehler wie Schweißperlen auf dem Werkstück, unzulässige Welligkeit der Bleche oder fehlerhafte Blechdicken können somit erkannt werden.

Ferner kann durch entsprechende Aktoren sichergestellt werden, dass die Andruckelemente mit einer definierten Andruckkraft an den Blechen anliegen, z.B. indem die Position und der Anpressdruck der Elemente über eine Motorstromauswertung, eine kapazitive Sensorik und/oder eine Ultraschallsensorik ermittelt und überwacht werden. Auf die gleiche Weise kann die für das Öffnen der Andruckelemente notwendige Kraft gemessen werden, womit z.B. Anhaftungen der Andruckelemente am Werkstück detektiert und Beschädigungen der Vorrichtung vermieden werden können.

Gemäß einer Ausführungsform weist das mindestens eine Andruckelement einen Andruckabschnitt aus einem flexiblen (d.h. elastisch verformbaren) Material auf.

Gemäß dieser Ausführung kann z.B. der Andruckabschnitt (d.h. derjenige Abschnitt des Andruckelements, der beim Fixieren eines Werkstücks mit demselben in Kontakt steht) bzw. die Stirnseite des Andruckelements ein Dichtelement aus einem flexiblen (und z.B. hitzebeständigen) Material aufweisen bzw. aus einem flexiblen Material bestehen. Es kann auch vorgesehen sein, das gesamte Andruckelement aus einem flexiblen Material auszubilden. Somit kann sich das Andruckelement (bzw. dessen Form) beim Andrücken an ein Werkstück der Oberflächenform des Werkstücks anpassen und es kann ein lichtdichter Abschluss zwischen Andruckelement und Werkstück ermöglicht werden, wobei der Bewegungsfreiheitsgrad des Andruckelements mit der elastischen Verformung desselben gegeben ist; außerdem kann ein solches flexibles Material das Entstehen von Druckmarken auf dem Werkstück unterbinden.

Die oben beschriebenen Bewegungsfreiheitsgrade des Andruckelements - das Schwenken bzw. Verkippen, das geradlinige Verfahren und die elastische Verformung - sind auch beliebig kombinierbar, wobei z.B. mittels eines schwenkbar und (geradlinig) verfahrbar an dem Restgehäuse angeordneten Andruckelements, das einen flexiblen Andruckabschnitt aufweist, zuverlässig ein lichtdichter Abschluss zwischen einem Werkstück und dem Andruckelement realisiert werden kann.

Gemäß einer weiteren Ausführungsform weist das Gehäuse mehrere Andruckelemente auf, die jeweils einen Teil des Gehäuses zum Abschirmen der Laserstrahlung bilden und (z.B. jeweils separat) relativ zu dem übrigen Gehäuse mit jeweils mindestens einem Bewegungsfreiheitsgrad bewegbar sind, wobei z.B. für jedes der Elemente einer oder mehrere der oben beschriebenen Freiheitsgrade vorgesehen sein kann.

Wie oben am Beispiel eines stufenförmigen Werkstücks erläutert, kann mittels dieser Ausführung zuverlässig ein Fixieren von unregelmäßig geformten dreidimensionalen Werkstücken bei gleichzeitigem lichtdichten Abschluss zwischen den Andruckelementen und der jeweiligen Werkstückoberfläche realisiert werden, z.B. indem jedes der Andruckelemente lediglich eine in guter Näherung als eben anzusehende Teilfläche der Werkstückoberfläche kontaktiert und nicht die gesamte unregelmäßig geformte (z.B. bogenförmig gewölbte) Werkstückoberfläche abdecken muss.

Gemäß einer Ausführungsform ist die Scanneroptik derart ausgebildet, dass von ihr der Laserstrahl zu einem jeweiligen der Andruckelemente und dem mittels dieses Andruckelements fixierten Werkstück umgelenkt werden kann.

Zum Beispiel kann vorgesehen sein, mittels jeweiliger Andruckelemente gleichzeitig mehrere Werkstücke einzuspannen. Gemäß dieser Konfiguration kann ferner vorgesehen sein, die Strahlführung - z.B. mittels gezielten Umschaltens der Strahlführung zwischen unterschiedlichen Strahlführungsoptiken oder mittels einer steuerbaren Strahlführungsoptik - zu den jeweiligen Andruckelementen bzw. den von denselben jeweils fixierten Werkstücken umzulenken, wobei z.B. Werkstücke verschiedener Geometrien mit einer einzigen Vorrichtung gleichzeitig bearbeitbar sein können und/oder mehrere Nähte und/oder Werkstücke während einer einzigen Einspannung erzeugt werden können.

Gemäß einer weiteren Ausführungsform ist die Laserschweißvorrichtung als Zange (im Folgenden auch als "Schweißzange" bezeichnet) ausgebildet, wobei das Gehäuse mit dem mindestens einen Andruckelement einen Schenkel der Schweißzange bildet und ein Träger mit mindestens einem weiteren Andruckelement den zweiten Schenkel der Schweißzange bildet. Das bzw. die an dem Träger ausgebildeten Andruckelemente können analog zu den oben beschriebenen Konfigurationen relativ zu dem Träger mit mindestens einem Bewegungsfreiheitsgrad (aktiv und/oder passiv) bewegbar sein.

Gemäß einer weiteren Ausführungsform ist die Laserschweißvorrichtung als eine Schweißzange ausgebildet, bei welcher jeder Schenkel der Schweißzange jeweils ein Gehäuse, in dem jeweils eine Scanneroptik zum Führen eines Laserstrahls angeordnet ist, mit mindestens einem Andruckelement aufweist. In den Gehäusen können z.B. unabhängig voneinander steuerbare Scanneroptiken untergebracht sein, wobei sich mit einer solchen Vorrichtung z.B. Bleche von zwei Seiten gleichzeitig fügen lassen.

Bevorzugt ist an dem Träger bzw. in den jeweiligen Gehäusen einer solchen Schweißzange ein Sensor (z.B. ein pyroelektrischer Sensor) angeordnet, welcher eine Beobachtung des Prozessortes ermöglicht. Durch Einbindung des Sensors in die Regelung des jeweiligen Bearbeitungslasers können damit zuverlässig Durchschweißungen, Nahteinfälle durch zu großen Wärmeeintrag oder zu schwache Nähte durch zu kleinen Wärmeeintrag in die Fügestelle verhindert werden. Vorteilhaft bei der Verwendung einer solchen Regelung ist die Möglichkeit einer indirekten Leistungsmessung direkt am Werkstück. Bei Anwendung dieser sensorisch unterstützten Leistungsregelung kann ein qualitätsüberwachter Prozess sichergestellt werden. Weiterhin lässt sich über die Kenntnis der benötigten Laserleistung das Prozessfenster vergrößern. Es ist zusätzlich möglich, Veränderungen am optischen System (z.B. Verschmutzung von Schutzgläsern) rechtzeitig zu erkennen und zu quantifizieren. Ferner lässt die Verwendung eines solchen Sensors eine einseitige Bearbeitung ohne lasersichere Gegenlage zu, indem durch eine geeignete Signalverarbeitung des Sensors und die Einbindung in den Lasersicherheitskreis eine Durchschweißung sicher verhindert werden kann. Besonders vorteilhaft ist die einseitige Zugänglichkeit, welche eine Vielzahl von zusätzlichen Anwendungsmöglichkeiten erschließt.

Es kann - z.B. für das Anfertigen kurzer oder unterbrochener Schweißnähte - vorgesehen sein, die Andruckelemente an den beiden Schenkeln der Schweißzange synchronisiert zu öffnen und zu schließen, wobei die gesamte Vorrichtung (oder die zu fügenden Werkstücke) vor dem erneuten Schließen der Andruckelemente, z.B. um den Betrag der zuvor erzeugten Naht, in Vorschubrichtung versetzt wird. Der Bearbeitungslaser kann entsprechend synchronisiert an- und abgeschaltet werden, sodass ein Austreten des Laserstrahls bei geöffneter Schweißzange vermieden wird.

Es kann auch - z.B. für das Anfertigen langer unterbrechungsfreier Schweißnähte - vorgesehen sein, beim Fügeprozess über die Andruckelemente Ultraschallimpulse derart in das Werkstück einzuleiten, dass sich die Vorrichtung (bzw. die zu fügenden Werkstücke) trotz der auf dem Werkstück aufsitzenden Andruckelemente leicht verschieben lässt; ein (aktives) Öffnen und Schließen der Andruckelemente oder ein Unterbrechen des Fügevorgangs ist damit nicht erforderlich.

Es kann vorgesehen sein, dass die Werkstücke mittels ineinander liegender Andruckelemente fixiert werden, wobei z.B. jedes Gehäuse bzw. jeder Schenkel einer entsprechenden Schweißzange ein äußeres Andruckelement und ein von demselben umgebenes inneres Andruckelement aufweist, wobei diese beiden Andruckelemente sozusagen ineinander verschachtelt sind. Gemäß dieser Konfiguration liegt z.B. beim Fügeprozess eines der Andruckelemente am Werkstück an und wird zusammen mit dem von ihm fixierten Werkstück entgegen der Vorschubrichtung des Laserprozesses synchron mit demselben verfahren, während das andere Andruckelement vom Werkstück angehoben ist und in Vorschubrichtung des Laserprozesses bewegt wird, wobei die Vorschubgeschwindigkeit dieses Andruckelementes größer ist als die Vorschubgeschwindigkeit des Laserprozesses. Wenn oder (kurz) bevor das am Werkstück anliegende Andruckelement seine vorgegebene Endposition erreicht, wird das bislang angehobene Andruckelement auf das Werkstück aufgesetzt und nun zusammen mit demselben entgegen der Vorschubrichtung des Laserprozesses synchron mit demselben verfahren, wohingegen das bislang auf dem Werkstück aufsitzende Andruckelement angehoben und in Vorschubrichtung bewegt wird. Dies ermöglicht einen kontinuierlichen Vorschub der Vorrichtung bzw. der Werkstücke und ein unterbrechungsfreies Fügen von langen Nähten.

Soll die Fügevorrichtung bei Fügeprozessen verwendet werden, bei denen eine Zuführung von Zusatzwerkstoffen notwendig ist (z. B. Löten und Aluminiumschweißen mit Zusatzdraht), kann vorgesehen sein, diese über die Andruckelemente zuzuführen. Für das Schweißen unter Schutzgas können in den Andruckelementen Düsen zum Einbringen von Schutzgas integriert sein, sodass z.B. der komplette Raum innerhalb der Andruckelemente mit dem Schutzgas gefüllt werden kann und somit eine optimale Abdeckung der Naht gewährleistet werden kann. Über eine Absaugeinrichtung kann zudem der beim Fügeprozess entstehende Schmauch abgesaugt werden.

Als zusätzlicher Schutz vor dem Austreten von Laserstrahlung können die Andruckelemente von Textilien, Kunststoffen oder Borsten umfasst sein, die bei aufgesetztem Andruckelement ebenfalls auf dem Werkstück aufsitzen (oder über dasselbe hinausragen) und z.B. etwaige verbleibende Spalte zwischen den Andruckelementen und den Werkstücken lichtdicht überdecken.

Das oder die Andruckelemente können in einer Stufen- bzw. Winkelform ausgebildet sein, wobei an der Stirnseite eines solchen Andruckelements ein gegenüber einem anderen Abschnitt erhabener bzw. vorstehender Abschnitt ausgebildet ist. Diese Konfiguration ist z.B. speziell für das Anfertigen von Nähten dicht an einem Werkstückende, z.B. einem Blechrand, geeignet, wobei bei an das Werkstück herangefahrenen Andruckelementen der erhabene Bereich auf der Stirnseite eines ihm gegenüberstehenden Andruckelements aufsitzt und der nicht erhabene (rückversetzte) Bereich auf dem Werkstück aufsitzt. Über den gegenüber dem erhabenen Bereich zurückversetzten Bereich des Andruckelements werden die Bleche aneinander gedrückt und somit fixiert.

Des Weiteren kann vorgesehen sein, die Andruckelemente zum Zuführen von Pulverwerkstoffen oder Kleinteilen aus einem entsprechenden Magazin und Positionieren derselben an der Fügestelle auszubilden. Da es in den Andruckelementen zu einer starken Erwärmung kommen kann, kann ferner vorgesehen sein, die Andruckelemente mit Kühlkanälen auszustatten, durch die z.B. Kühlwasser geleitet wird.

Die Erfindung wird nachfolgend anhand von Ausführungsbeispielen mit Bezug auf die Figuren 1 bis 9 veranschaulicht, wobei gleiche oder ähnliche Merkmale mit gleichen Bezugszeichen versehen sind; hierbei zeigen schematisch:
- Fig. 1:: eine geschlossene Schweißzange mit in Andruckrichtung verfahrbaren Andruckelementen;
- Fig. 2:: die Schweißzange gemäß Fig. 1 in geöffnetem Zustand;
- Fig. 3A, 3B:: die Funktionsweise eines verkippbar angeordneten Andruckelements;
- Fig. 4:: einen Abschnitt eines Andruckelements mit Gummilippe;
- Fig. 5:: einen Abschnitt eines Andruckelements mit Borsten;
- Fig. 6:: einen Abschnitt eines Andruckelements mit textiler Dichtlippe;
- Fig. 7:: einen Abschnitt eines gestuften Andruckelements mit textiler Dichtlippe;
- Fig. 8:: einen Abschnitt eines gestuften Andruckelements mit verschiebbarer Kulisse;
- Fig. 9:: mittels eines gestuften Andruckelements eingespannte Bleche.

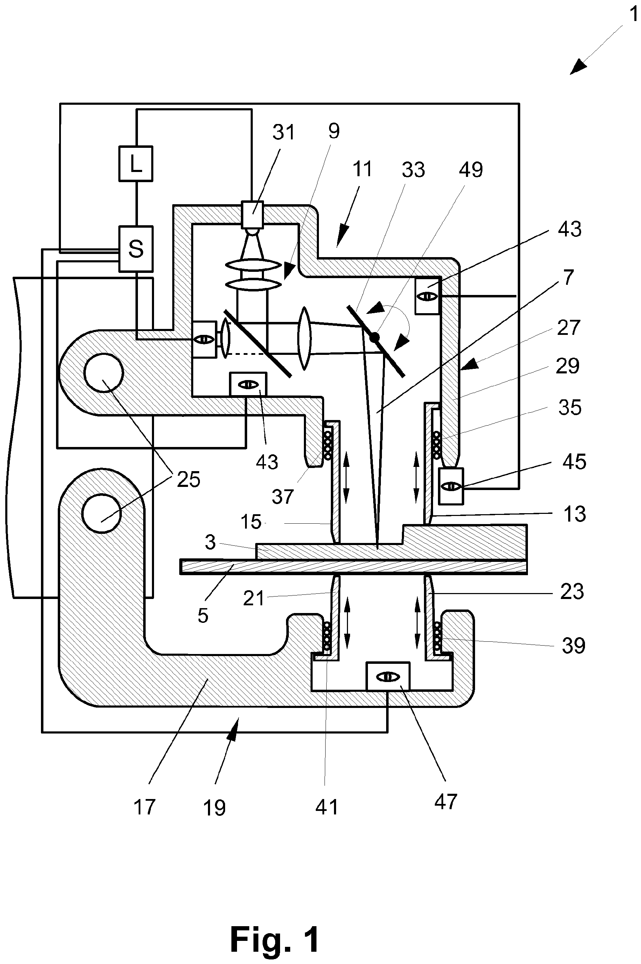

Figur 1 zeigt eine in Form einer Schweißzange 1 ausgeführte Laserschweißvorrichtung 1 gemäß einer Ausführungsform der Erfindung beim Fügen zweier Werkstücke 3, 5 mittels eines Laserstrahls 7, wobei der Laserstrahl 7 mittels einer Scanneroptik 9 geführt bzw. positioniert wird. Die Schweißzange 1 weist zwei an dem oberen Schenkel 11 der Zange 1 angeordnete obere Andruckelemente 13, 15 und zwei an dem Träger 17 des unteren Schenkels 19 der Zange 1 angeordnete untere Andruckelemente 21, 23 auf. Die Schenkel 11, 19 sind schwenkbar mit der Führungseinheit 25 verbunden und pressen über die Andruckelemente 13, 15, 21, 23 die zu fügenden Werkstücke 3, 5 - hier in Form von Blechen 3, 5 - aneinander. Der obere Schenkel 11 bildet ein Gehäuse 27, das die Scanneroptik 9 und den von der Scanneroptik 9 zu den Werkstücken 3, 5 hin verlaufenden Laserstrahl 7 umhaust. Die oberen Andruckelemente 13, 15 bilden einen Teil des Gehäuses 27 und sind relativ zu dem übrigen Gehäuse bzw. Restgehäuse 29 bewegbar, wobei in der Konfiguration gemäß Fig. 1 die Andruckelemente 13, 15 - hier als Beispiel mittels elektromotorischer Aktoren 35, 37 - im Wesentlichen entlang der Andruckrichtung verfahrbar an dem Restgehäuse 29 angebracht sind. Die unteren Andruckelemente 21, 23 sind auf analoge Weise mittels Aktoren 39, 41 verfahrbar an dem Träger 17 angebracht, sodass die Andruckelemente 13, 15, 21, 23 unabhängig von der Andruckbewegung der Schenkel 11, 19 an die Bleche 3, 5 gedrückt bzw. von denselben losgelöst werden können. Gemäß Fig. 1 ist das obere Werkstück 3 ein stufenförmiges Blech, d.h. weist Abschnitte unterschiedlicher Blechdicke auf. Indem die oberen Andruckelemente 13, 15 (separat voneinander) verfahrbar sind, können sie bis auf die Höhe des jeweiligen Blechabschnitts abgesenkt werden und somit (zusammen mit dem Werkstück 3) das Gehäuse 27 lichtdicht abschließen.

Der Laserstrahl 7 wird von einem Bearbeitungslaser 31 erzeugt und über die Linsen und Spiegel der Scanneroptik - durch das Gehäuse 27 verlaufend - mittels eines bewegbaren Scannerspiegels 33 der Scanneroptik 9, der schwenkbar an einer Achse 49 eines Galvanometerantriebs (nicht dargestellt) angebracht ist, über die Oberfläche des oberen Werkstücks 3 geführt.

Über die Streulichtsensoren 43 wird das von den Werkstücken 3, 5 in die Scanneroptik 9 reflektierte Laserlicht und über den Streulichtsensor 45 das durch einen eventuellen Spalt zwischen den Werkstücken 3, 5 und den oberen Andruckelementen 13, 15 hinaustretende Streulicht gemäß der Erfindung detektiert. Sollte über den Streulichtsensor 45 Streulichtstrahlung festgestellt werden, wird der Bearbeitungslaser 31 sofort abgeschaltet, um eine Personengefährdung auszuschließen. In Fig. 1 sind schematisch eine Sicherheitseinheit S, von der die von den Streulichtsensoren 43, 45 und dem Pyrometer 47 erfassten Intensitäten ausgewertet werden können, und eine Lasersteuereinheit L, die mit der Sicherheitseinheit S und dem Laser 31 verbunden ist, dargestellt. Gemäß der Erfindung wird von der Sicherheitseinheit S bei Feststellen zu hoher Intensitäten ein Abschaltsignal an die Lasersteuerung L gegeben werden. Mit dem im unteren Schenkel 19 positionierten Pyrometer 47 wird die Temperatur des unteren Blechs 5 von der prozessabgewandten Seite her gemessen.

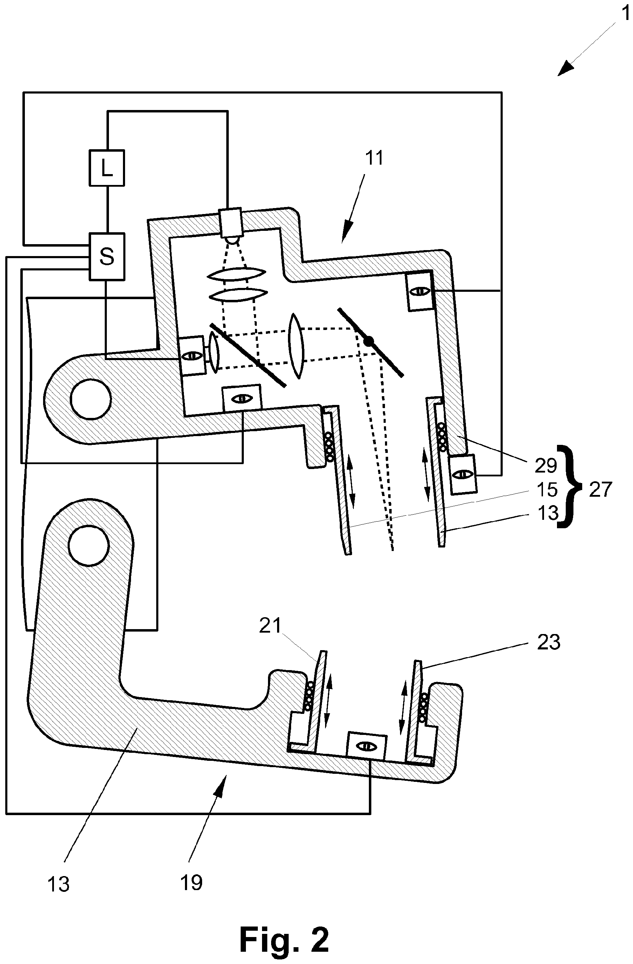

Figur 2 zeigt die Schweißzange gemäß Fig. 1 mit geöffneten Schenkeln 11, 19 und eingefahrenen Andruckelementen 13, 15, 21, 23; wobei der Bearbeitungslaser 31 mit dem Öffnen der Schenkel 11, 19 automatisch abgeschaltet wird (in Fig. 2 veranschaulicht durch die gestrichelte Darstellung des Laserstrahl-Verlaufs). Gemäß Fig. 2 sind bei geöffneter Schweißzange 1 beide Schenkel 11, 19 der Zange bezüglich ihrer jeweiligen Schließposition (d.h. ihrer Position bei geschlossener Zange 1) ausgelenkt. Es kann auch vorgesehen sein, denjenigen Schenkel der Zange 1, welcher das Gehäuse 27 mit der Scanneroptik 9 aufweist, unbewegt zu lassen und zum Öffnen bzw. Schließen der Zange 1 lediglich den jeweils anderen (hier: den unteren) Schenkel 19 zu bewegen, wobei z.B. ein Erschüttern der Scanneroptik 9 vermieden werden kann.

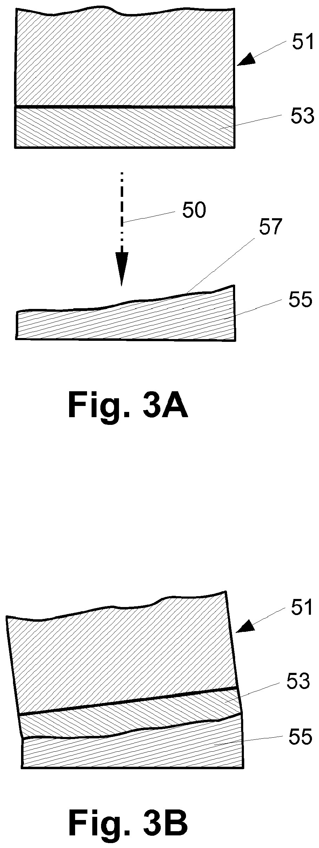

Die Figuren 3A und 3B veranschaulichen schematisch die Funktionsweise eines um eine senkrecht zu der Andruckrichtung 50 verlaufende Schwenkachse schwenk- bzw. verkippbaren Andruckelements 51 mit einem Andruckabschnitt 53 aus einem elastisch verformbaren Material. Beim Aufsetzen des Andruckelements 51 auf ein keilstumpfförmiges Werkstück 55 mit einer unebenen Oberfläche 57 verkippt das Andruckelement 55 und der flexible Andruckabschnitt 53 passt sich in seiner Form an die Form der Werkstückoberfläche 57 an, sodass eine lichtdichte Verbindung zwischen dem Andruckelement 51 und der Fläche 57 entsteht.

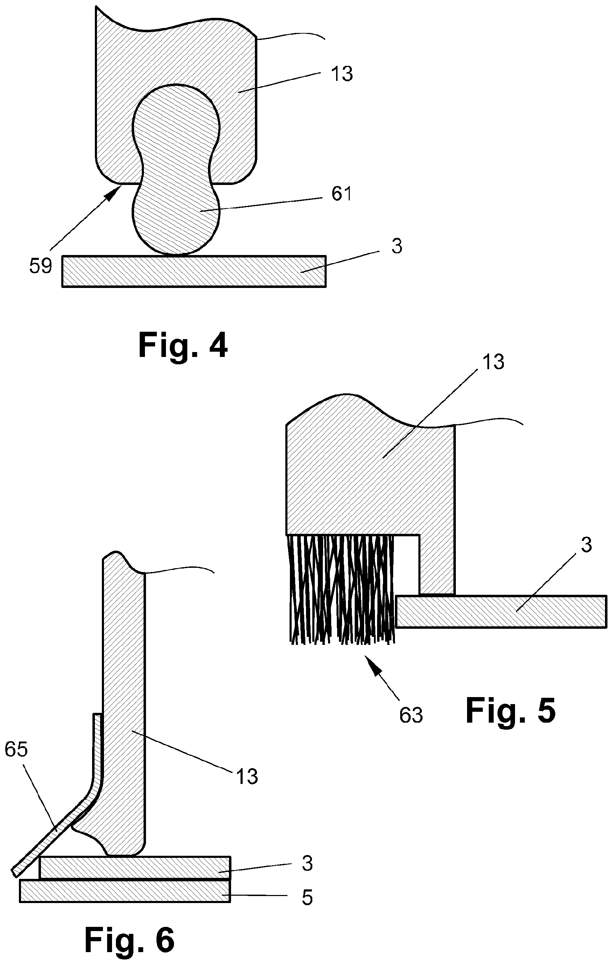

Fig. 4 zeigt den Andruckabschnitt bzw. die Stirnseite 59 eines Andruckelements am Beispiel eines oberen Andruckelements 13, wobei eine Gummilippe 61 in die Stirnseite 59 eingesetzt ist, wodurch z.B. verhindert werden kann, dass das Andruckelement 13 an der Oberfläche des Blechs 3 Druckmarken hinterlässt. Die Gummilippe 61 gewährleistet zudem bei unebenen Werkstückoberflächen eine zuverlässige optische Abdichtung zwischen der Innenseite des Andruckelements 13 bzw. des Gehäuses 27 und der Außenumgebung.

Andere Möglichkeiten einer optisch dichten Abschirmung der Umgebung gegen den Innenraum eines Andruckelements 13 sind in den Figuren 5 und 6 dargestellt. Bei der in Fig. 5 gezeigten Konfiguration wird die optische Abdichtung mittels dicht angeordneter, flexibler Borsten 63 sichergestellt, welche am Außenrand des Andruckelements 13 befestigt sind. Gemäß der in Fig. 6 veranschaulichten Konfiguration wird an der Außenseite des Andruckelements 13 ein flexibles Textilgewebe 65 befestigt, welches einen gegebenenfalls vorhandenen Spalt zwischen dem Werkstück 3 und dem Andruckelement 13 sicher überdeckt.

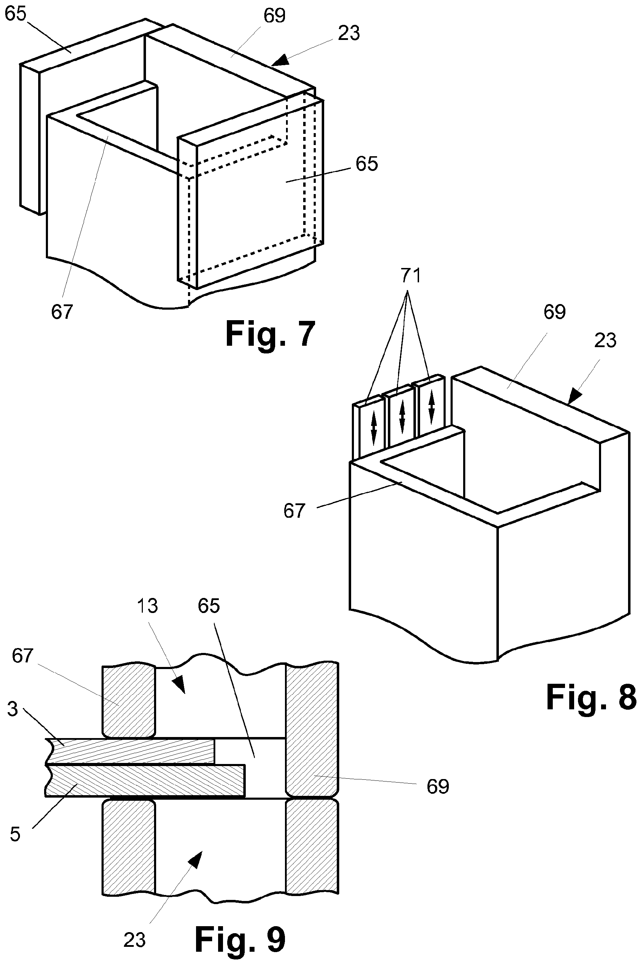

Die Figuren 7 und 8 veranschaulichen am Beispiel eines unteren Andruckelements 23 ein gestuftes Andruckelement mit einem rückversetzten Abschnitt 67 und einem (demgegenüber) erhabenen bzw. hervorstehenden Abschnitt 69, wobei solche Andruckelemente insbesondere für das Schweißen im Bereich der Randregionen der Werkstücke 3, 5 geeignet sind. Bei der Konfiguration gemäß Fig. 7 ist zudem ein flexibles Textilgewebe 65 und bei der Konfiguration gemäß Fig. 8 sind (aktiv oder passiv) verschiebbare Kulissen 71 als optische Dichtungen an dem zurückgesetzten Bereich 67 angebracht.

In Fig. 9 ist die Anwendung eines gestuften oberen Andruckelements 13 im Zusammenwirken mit einem ungestuften unteren Andruckelement 23 veranschaulicht. Der erhabene Abschnitt 69 des gestuften, oberen Andruckelements 13 liegt auf dem ungestuften, unteren Andruckelement 23 auf. Der rückversetzte Abschnitt 67 des gestuften Andruckelements 13 liegt auf dem Blech 3 auf, wobei der seitlich entstehende Spalt zwischen dem rückversetzten Abschnitt 67 des Andruckelements 13 und dem Andruckelement 23 durch das flexible Textil 65 optisch abgedichtet wird.

### Liste der verwendeten Bezugszeichen

- 1: Schweißzange
- 3: oberes Werkstück
- 5: unteres Werkstück
- 7: Laserstrahl
- 9: Scanneroptik
- 11: oberer Schenkel
- 13, 15: obere Andruckelemente
- 17: Träger
- 19: unterer Schenkel
- 21, 23: untere Andruckelemente
- 25: Führungseinheit
- 27: Gehäuse
- 29: Restgehäuse
- 31: Bearbeitungslaser
- 33: Scannerspiegel
- 35, 37: obere Aktoren
- 39, 41: untere Aktoren
- 43, 45: Streulichtsensoren
- 47: Pyrometer
- 49: Achse des Galvanometerantriebs
- 50: Andruckrichtung
- 51: verkippbares Andruckelement
- 53: Andruckabschnitt aus einem flexiblen Material
- 55: keilstumpfförmiges Werkstück
- 57: unebene Oberfläche
- 59: Stirnseite
- 61: Gummilippe
- 63: Borsten
- 65: flexibles Textilgewebe
- 67: rückversetzter Abschnitt
- 69: hervorstehender Abschnitt
- 71: Kulisse

## Patentansprüche

1. Laserschweißvorrichtung (1) zum Fügen von Werkstücken (3, 5) mittels eines Laserstrahls (7), aufweisend:
- eine Scanneroptik (9) zum Führen des Laserstrahls (7),
- mehrere Andruckelemente (13, 15), die während des Fügeprozesses zum Fixieren der Werkstücke (3, 5) entlang einer Andruckrichtung auf zumindest eines der Werkstücke (3) gepresst werden,
- ein Gehäuse (27), das die Scanneroptik (9) und den von der Scanneroptik zu den Werkstücken (3, 5) hin verlaufenden Laserstrahl (7) umhaust,
**dadurch gekennzeichnet, dass**
- die Laserschweißvorrichtung (1) innerhalb und/oder außerhalb des Gehäuses (27) angeordnete Streulichtsensoren (43, 45) zur Detektion der Intensität von gestreuter Laserstrahlung und eine mit den Streulichtsensoren (43, 45) verbundene Sicherheitseinheit (S), die derart ausgebildet ist, dass von den Streulichtsensoren (43, 45) erfasste Streulichtintensitäten elektronisch erfasst und ausgewertet sind, um bei Überschreiten eines Grenzwertes Alarm auszulösen und/oder den Fügeprozess zu unterbrechen, aufweist;
- die Andruckelemente (13, 15) einen Teil des Gehäuses (27) bilden wobei mindestens eines der Andruckelemente (13, 15) entlang der Andruckrichtung relativ zu dem übrigen Gehäuse bewegbar ist.

2. Laserschweißvorrichtung nach Anspruch 1, **dadurch gekennzeichnet, dass** die Scanneroptik (9) mindestens einen bewegbaren Scannerspiegel (33) zum Führen des Laserstrahls (7) aufweist.

3. Laserschweißvorrichtung nach Anspruch 1 oder 2, **dadurch gekennzeichnet, dass** das relativ zu dem übrigen Gehäuse mit mindestens einem Bewegungsfreiheitsgrad bewegbare Andruckelement (51) um eine im Wesentlichen senkrecht zu der Andruckrichtung (50) verlaufende Achse schwenkbar an dem übrigen Gehäuse gelagert ist.

4. Laserschweißvorrichtung nach einem der Ansprüche 1 bis 3, **dadurch gekennzeichnet, dass** zumindest ein Andruckelement (13, 15) entlang der Andruckrichtung bewegbar an dem übrigen Gehäuse gelagert ist.

5. Laserschweißvorrichtung nach einem der Ansprüche 1 bis 4, **dadurch gekennzeichnet, dass** zumindest ein Andruckelement (51) einen Andruckabschnitt (53) aus einem flexiblen Material aufweist.

6. Laserschweißvorrichtung nach einem der Ansprüche 1 bis 5, **dadurch gekennzeichnet, dass** mehrere Andruckelemente (13, 15) relativ zu dem übrigen Gehäuse mit mindestens einem Bewegungsfreiheitsgrad bewegbar sind.

7. Laserschweißvorrichtung nach Anspruch 6, **dadurch gekennzeichnet, dass** die Scanneroptik (9) derart ausgebildet ist, dass von ihr der Laserstrahl (7) zu einem jeweiligen der Andruckelemente und dem von diesem Andruckelement fixierten Werkstück umgelenkt werden kann.

8. Laserschweißvorrichtung nach einem der Ansprüche 1 bis 7, **dadurch gekennzeichnet, dass** die Laserschweißvorrichtung als Schweißzange (1) ausgebildet ist, wobei das Gehäuse (27) mit dem mindestens einen Andruckelement (13, 15) einen Schenkel (11) der Schweißzange bildet und ein Träger (17) mit mindestens einem weiteren Andruckelement (21, 23) den zweiten Schenkel (19) der Schweißzange bildet.

9. Laserschweißvorrichtung nach einem der Ansprüche 1 bis 7, **dadurch gekennzeichnet, dass** die Laserschweißvorrichtung als Schweißzange ausgebildet ist, und wobei jeder Schenkel der Schweißzange jeweils ein Gehäuse, in dem jeweils eine Scanneroptik zum Führen eines Laserstrahls angeordnet ist, mit mindestens einem Andruckelement aufweist.

10. Verfahren zum Fügen von Werkstücken mittels eines Laserstrahls, **dadurch gekennzeichnet, dass** die Werkstücke mittels einer Laserschweißvorrichtung gemäß einem der Ansprüche 1 bis 9 gefügt werden.

## Claims

1. A laser welding device (1) for joining work pieces (3, 5) by means of a laser beam (7), comprising:
- Scanning optics (9) to guide the laser beam (7);
- Multiple pressure elements (13, 15), which are pressed along a pressing direction on at least one of the work pieces (3) to fix the work pieces (3, 5) during the joining process;
- A housing (27) that encloses the scanning optics (9) and the laser beam (7) running from the scanning optics to the work pieces (3, 5);
**characterized in that**
- The laser welding device (1) has, arranged inside and/or outside of the housing (27), scattered light sensors (43, 45) to detect the intensity of scattered laser radiation, and a safety unit (S) that is connected with the scattered light sensors (43, 45) and that is designed so that scattered light intensities detected by the scattered light sensors (43, 45) are electronically captured and evaluated, to trigger an alarm and/or to interrupt the joining process if a threshold is exceeded;
- The pressure elements (13, 15) form a part of the housing (27), at least one of the pressure elements (13, 15) being movable relative to the rest of the housing along the pressing direction.

2. A laser welding device according to claim 1, **characterized in that** the scanning optics (9) have at least one movable scanning mirror (33) to guide the laser beam (7).

3. A laser welding device according to claim 1 or 2, **characterized in that** the pressure element (51) that is movable with at least one degree of freedom of movement relative to the rest of the housing is mounted on the rest of the housing so that this pressure element (51) can pivot about an axis running essentially perpendicular to the pressing direction (50).

4. A laser welding device according to any one of claims 1 through 3, **characterized in that** at least one pressure element (13, 15) is mounted on the rest of the housing so that it is movable along the pressing direction.

5. A laser welding device according to any one of claims 1 through 4, **characterized in that** at least one pressure element (51) has a pressing section (53) made of a flexible material.

6. A laser welding device according to any one of claims 1 through 5, **characterized in that** multiple pressure elements (13, 15) are movable with at least one degree of freedom of movement relative to the rest of the housing.

7. A laser welding device according to claim 6, **characterized in that** the scanning optics (9) are designed so that they can redirect the laser beam (7) to a respective one of the pressure elements and to the work piece fixed by this pressure element.

8. A laser welding device according to any one of claims 1 through 7, **characterized in that** the laser welding device is in the form of a pair of welding tongs (1), the housing (27) forming, with the at least one pressure element (13, 15) one arm (11) of the pair of welding tongs, and a support (17) forming, with at least one other pressure element (21, 23), the second arm (19) of the pair of welding tongs.

9. A laser welding device according to any one of claims 1 through 7, **characterized in that** the laser welding device is in the form of a pair of welding tongs and wherein each arm of the pair of welding tongs has a housing, each housing having one set of scanning optics to guide a laser beam arranged in it, with at least one pressure element.

10. A process for joining work pieces by means of a laser beam, **characterized in that** the work pieces are joined by means of a laser welding device according to one of claims 1 through 9.

## Revendications

1. Dispositif de soudage laser (1) pour l'assemblage de pièces (3, 5) au moyen d'un faisceau laser (7), présentant :
- une optique de balayage (9) pour le guidage du faisceau laser (7),
- plusieurs éléments pour exercer une pression (13, 15), qui sont pressés le long d'une direction d'exercice de pression sur au moins l'une des pièces (3) pendant le processus d'assemblage pour la mise en place des pièces (3, 5),
- un boîtier (27), qui entoure l'optique de balayage (9) et le faisceau laser (7) s'étendant à partir de l'optique de balayage jusqu'aux pièces (3, 5),
**caractérisé en ce que**
- le dispositif de soudage laser (1) présente à l'intérieur et/ou à l'extérieur du boîtier (27) des capteurs de lumière diffuse (43, 45) pour la détection de l'intensité d'un faisceau laser dispersé et une unité de sécurité (S) reliée aux capteurs de lumière diffuse (43, 45) qui est conçue de telle manière que les intensités de lumière diffuse détectées par les capteurs de lumière diffuse (43, 45) sont détectées électroniquement et exploitées afin de déclencher une alarme lors d'un dépassement d'une valeur de seuil et/ou d'interrompre le processus d'assemblage ;
- les éléments pour exercer une pression (13, 15) forment une partie du boîtier (27), où au moins l'un des éléments pour exercer une pression (13, 15) peut se déplacer le long de la direction d'exercice de la pression par rapport au reste du boîtier.

2. Dispositif de soudage laser selon la revendication 1, **caractérisé en ce que** l'optique de balayage (9) présente au moins un miroir de balayage (33) mobile pour le guidage du faisceau laser (7).

3. Dispositif de soudage laser selon la revendication 1 ou 2, **caractérisé en ce que** l'élément pour exercer une pression (51) mobile avec au moins un degré de liberté de mouvement par rapport au reste du boîtier est logé sur le reste du boîtier en pouvant pivoter autour d'un axe s'étendant essentiellement perpendiculairement par rapport à la direction d'exercice de la pression (50).

4. Dispositif de soudage laser selon l'une des revendications 1 à 3, **caractérisé en ce qu'**au moins un élément pour exercer une pression (13, 15) est logé sur le reste du boîtier mobile le long de la direction d'exercice de la pression.

5. Dispositif de soudage laser selon l'une des revendications 1 à 4, **caractérisé en ce qu'**au moins un élément pour exercer une pression (51) présente une section d'exercice de pression (53) dans un matériau souple.

6. Dispositif de soudage laser selon l'une des revendications 1 à 5, **caractérisé en ce que** plusieurs éléments pour exercer une pression (13, 15) sont mobiles par rapport au reste du boîtier avec au moins un degré de liberté de mouvement.

7. Dispositif de soudage laser selon la revendication 6, **caractérisé en ce que** l'optique de balayage (9) est conçue de telle manière que le faisceau laser (7) peut être dévié par celle-ci vers l'un des éléments pour exercer une pression respectifs et la pièce fixée par cet élément pour exercer une pression.

8. Dispositif de soudage laser selon l'une des revendications 1 à 7, **caractérisé en ce que** le dispositif de soudage laser est conçu sous la forme d'une pince de soudage (1), où le boîtier (27) forme un mors (11) de la pince de soudage avec l'au moins un élément pour exercer une pression (13, 15) et un support (17) forme, avec au moins un autre élément pour exercer une pression (21, 23), le deuxième mors (19).

9. Dispositif de soudage laser selon l'une des revendications 1 à 7, **caractérisé en ce que** le dispositif de soudage laser est conçu sous la forme d'une pince de soudage, et où à chaque mors de la pince de soudage présente respectivement un boîtier, dans lequel est disposée une optique de balayage respective pour le guidage d'un faisceau laser avec au moins un élément pour exercer une pression.

10. Procédé d'assemblage de pièces au moyen d'un faisceau laser, **caractérisé en ce que** les pièces sont assemblées au moyen d'un dispositif de soudage laser selon l'une des revendications 1 à 9.
